# EUROPEAN PATENT APPLICATION

(11) **EP 2 846 278 A2**
(43) Date of publication of application: **11.03.2015**
(21) Application number: 14183527.2
(22) Date of filing: 04.09.2014
(51) Int. Cl.: G06F 17/30

(54) **Method for controlling content in mobile electronic device**

(30) Priority: 10.09.2013 KR 20130108363
(71) Applicant: Samsung Electronics Co., Ltd, Gyeonggi-do 443-742 (KR)
(72) Inventor: Kim, Han Jib, 443-742 Gyeonggi-do (KR); Kang, Doo Suk, 443-742 Gyeonggi-do (KR); Kim, Geon Soo, 443-742 Gyeonggi-do (KR); Choi, Bo Kun, 443-742 Gyeonggi-do (KR)
(74) Representative: Birchenough, Lewis

(57) **Abstract**

A method for controlling content in a mobile electronic device includes selecting at least one first content to be played on a web page, checking whether a second content is being played back, receiving an input for registering the first content with a list while the second content is played back, and when the input is received, storing information on the web page from which the first content is obtained and registering the first content with the list. A mobile electronic device includes a controller configured to determine whether a second content is being played back, receiving an input for registering the first content with the list, when the second content is played back, and when the input is received, store information on the web page on which the first content is located and register the first content with the list.

## Description

### TECHNICAL FIELD

The present disclosure relates to a method for controlling content in a mobile electronic device, and more particularly, to a method of providing support so that content is controlled by managing a list of pieces of content.

### BACKGROUND

With the remarkable development of the information communication technology and the semiconductor technology, the spread and use of mobile electronic devices are rapidly growing. More specifically, a recent mobile electronic device is not limited to typical and unique fields, but reaches a mobile convergence/complex stage that covers the fields of other devices. Accordingly, the recent mobile electronic device has been equipped with various functions, such as a video call function, an electronic organizer function, and an Internet function, in addition to the early simple voice call and short message transmission functions. In order to support such various functions, further improved hardware and software are used.

As the mobile electronic device having improved performance as described above supports a multi-tasking environment, a user has become able to split one screen of the mobile electronic device and control different applications displayed on the spit screens at the same time. To this end, there are emerging technologies using various types of pop-up windows, such as a pop-up player, a pop-up browser, and a pop-up dictionary in which content executed by an application having a specific function may be output to a small screen and content executed by another application may be output to the entire screen. Furthermore, a multi-window technology in which a plurality of windows may be displayed on a screen and a user may control them to have a desired location and size is being used.

While content is output and another application is executed using such a pop-up window or multi-window function, for example, there may be the case where a specific web page is accessed, a moving image is downloaded from the web page and the downloaded moving image is played back, and at the same time another web page is used or another application is executed. In the prior art, a pop-up window automatically disappears when content output to the pop-up window is ended, or if a specific web page that has been used is sought to be used again before the content is ended, the specific web page that provides the content has to be searched for in order to play back the content. Furthermore, if a multi-window function is used, when a window in which content is played back is ended while playing back the content, a web page that provides the content has to be searched for in order to play back the content, as in the case where a pop-up window disappears.

### SUMMARY

To address the above-discussed deficiencies, it is a primary object to provide a method for providing support so that content is conveniently controlled by managing a list of pieces of content output in a pop-up window or multi-window way.

In accordance with an aspect of the present disclosure, a method for controlling content in a mobile electronic device comprises selecting at least one a first content from a web page, checking whether a second content is played back, checking whether an input for registering the first content with a list is received when the second content is played back, and storing, when the input for registering the first content with the list is received, information about the web page from which the first content is obtained and registering the first content with the list.

In accordance with another of the present disclosure, a mobile electronic device includes a touch screen configured to select at least one a first content from a web page and a controller configured to check whether a second content is played back, check whether an input for registering the first content with the list is received, when the second content is played back, and store, when the input for registering the first content with the list is received, information about the web page from which the first content is obtained and register the first content with the list..

Before undertaking the DETAILED DESCRIPTION below, it may be advantageous to set forth definitions of certain words and phrases used throughout this patent document: the terms "include" and "comprise," as well as derivatives thereof, mean inclusion without limitation; the term "or," is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, such a device maybe implemented in hardware, firmware or software, or some combination of at least two of the same. It should be noted that the functionality associated with any particular controller may be centralized or distributed, whether locally or remotely. Definitions for certain words and phrases are provided throughout this patent document, those of ordinary skill in the art should understand that in many, if not most instances, such definitions apply to prior, as well as future uses of such defined words and phrases.

### BRIEF DESCRIPTION OF THE DRAWINGS

For a more complete understanding of the present disclosure and its advantages, reference is now made to the following description taken in conjunction with the accompanying drawings, in which like reference numerals represent like parts:
FIG. 1 is a block diagram illustrating a mobile electronic device in accordance with an embodiment of the present disclosure;
FIG. 2 is a flowchart illustrating an operation for registering content displayed on a pop-up window, with a content playback list in accordance with an embodiment of the present disclosure;
FIG. 3 is a flowchart illustrating an operation for registering content displayed on a multi-window way, with the content playback list in accordance with another embodiment of the present disclosure;
FIG. 4 is a flowchart illustrating an operation for editing some of contents registered with the content playback list in accordance with an embodiment of the present disclosure;
FIG. 5 is a flowchart illustrating an operation for moving to the URL of a web page from which content has been obtained in accordance with an embodiment of the present disclosure;
FIG. 6A and 6B are diagrams illustrating an operation for registering pieces of content with the content playback list in accordance with an embodiment of the present disclosure;
FIGS. 7A to 7D are diagrams illustrating an operation for editing pieces of content registered with the content playback list in accordance with an embodiment of the present disclosure; and
FIGS 8A to 8E are a diagram illustrating operations for moving to a web page from which content has been obtained in accordance with an embodiment of the present disclosure.

### DETAILED DESCRIPTION

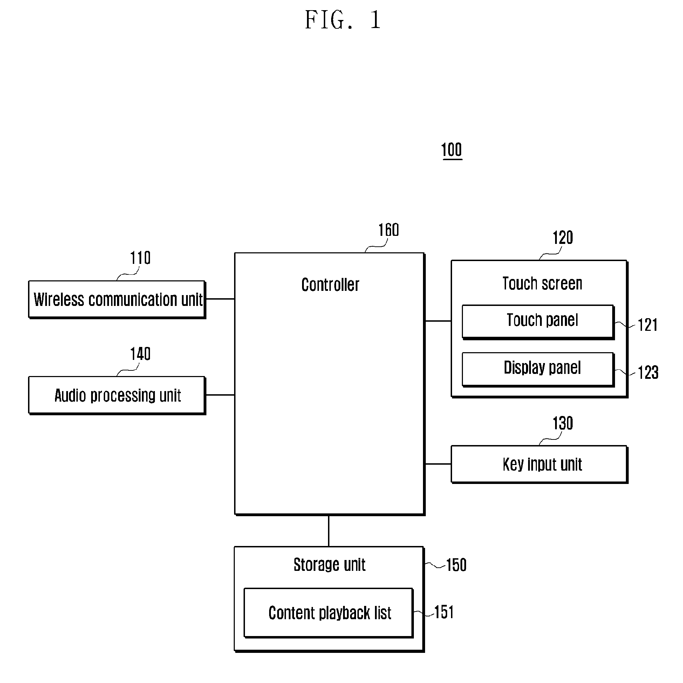

FIGURES 1 through 8, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged electronic devices.

In the following description, a mobile electronic device in accordance with an embodiment of the present disclosure is a device having computing resources, and can include, for example, a smart phone, a tablet PC, a digital camera, a computer monitor, a Personal Digital Assistant (PAD), an electronic note, a desktop PC, a Portable Multimedia Player (PMP), a media player (e.g., an MP3 player), sound equipment, a wrist watch, a terminal for game, and home appliances (e.g., a refrigerator, TV, and a washing machine).

Hereinafter, a method for controlling content in a mobile electronic device in accordance with an embodiment of the present disclosure is described in detail. Terms or words used hereinafter should not be construed as having common or dictionary meanings, but should be construed as having meanings and concepts that comply with the technical field of the present disclosure. Accordingly, the following description and drawings illustrate embodiments of the present disclosure and do not limit the scope of the present disclosure. It would be understood by one of ordinary skill in the art that a variety of equivalents and modifications of the embodiments exist. Furthermore, in the accompanying drawings, some elements are illustrated as being enlarged and are illustrated schematically, and the size of each element does not accurately reflect its real size. Accordingly, the present disclosure is not restricted by the relative sizes or spaces that are drawn in the figures. A detailed description of known functions or constructions related to the present disclosure will be omitted where such a description would obscure the present disclosure in unnecessary detail.

FIG. 1 is a block diagram illustrating a mobile electronic device in accordance with an embodiment of the present disclosure.

Referring to FIG. 1, the mobile electronic device 100 in accordance with an embodiment of the present disclosure can include a wireless communication unit 110, a touch screen 120, a key input unit 130, an audio processing unit 140, a storage unit 150, and a controller 160.

The wireless communication unit 110 can form a communication channel for a voice call, a communication channel for a video call, and a communication channel for the transmission of data, such as images or messages, under the control of the controller 160. To this end, the wireless communication unit 110 can include a radio frequency transmitter configured to perform up-conversion and amplification on the frequency of a transmitted signal and a radio frequency receiver configured to perform low-noise amplification and down-conversion on the frequency of a received signal. More specifically, the wireless communication unit 110 in accordance with an embodiment of the present disclosure can form a data communication channel with a server apparatus corresponding to the Uniform Resource Locator (URL) of a web page under the control of the controller 160, can receive specific content from the server apparatus using a streaming method or a downloading method through the data communication channel in response to a request from a user, and can provide the received content to the controller 160.

The touch screen 120 can include a touch panel 121 and a display panel 123. The touch panel 121 can be placed on the display panel 123. More specifically, the display panel 123 can be implemented in an add-on type in which the touch panel 121 is placed on the display panel 123 or in an on-cell type or in-cell type in which the touch panel 121 is inserted into the display panel 123.

The touch panel 121 can generate a touch event in response to a user's gesture for a screen, can convert the touch event into an Analog to Digital (AD) signal, and can transfer the AD signal to the controller 160. Such a touch panel 121 can be a complex touch panel that includes a hand touch panel configured to detect a hand gesture and a pen touch panel configured to detect a pen gesture. In this case, the hand touch panel can be implemented in a capacitive type. In some embodiments, the hand touch panel can be implemented in a resistive type, an infrared type, or an ultrasonic type. Furthermore, the hand touch panel does not generate a touch event in response to only a hand gesture, but can generate a touch event in response to another object, for example, an object made of conductive materials capable of applying a change in the capacitance. The pen touch panel can also be formed in an electromagnetic induction type. In this case, the pen touch panel can generate a touch event though a pen for touch that has been specially fabricated so that a magnetic field is formed.

In an embodiment of the present disclosure, the touch panel 121 can transfer touch events that are received in order to perform various functions, such as a function for selecting specific content from a web page, a function for adding content to a playback list, a function for editing a content playback list, and a function for moving to a web page from which content has been obtained, to the controller 160.

The display panel 123 can display data on a screen under the control of the controller 160. That is, when the controller 160 processes (e.g., decodes) data and stores the data in a buffer, the display panel 123 can convert the stored data into an analog signal and display the converted data on a screen. More specifically, in accordance with an embodiment of the present disclosure, the display panel 123 can receive the URL of a web page or specific content selected from the web page, and can display the URL of the web page or the specific content in a pop-up window way or display the URL of the web page or the specific content in a multi-window way under the control of the controller 160. Furthermore, the display panel 123 can display a separate pop-up window for selecting a method for playing back specific content received from a web page. For example, when specific content is selected from a web page, the display panel 123 can display a pop-up window for selecting one of the streaming method and the downloading method. It is however to be noted that the example is only illustrative and the selection of one of the streaming method and the downloading method can be previously set by a user or a designer. Furthermore, the display panel 123 can display a pop-up window indicative of whether or not to add specific content to the content playback list in the content playback list under the controller 160.

Furthermore, in accordance with an embodiment of the present disclosure, the display panel 123 can display various types of content playback lists 151. For example, the display panel 123 can display the content playback list 151 in a multi-layer structure, can display the content playback list 151 on one side of a pop-up window, or can display the content playback list 151 in the entire pop-up window. Furthermore, the display panel 123 can display the content playback list 151 in a quick panel form. Furthermore, the display panel 123 can display an icon for moving to a web page from which content has been obtained under the controller 160.

Such a display panel 123 can be formed of a Liquid Crystal Display (LCD), an Active Matrix Organic Light Emitted Diode (AMOLED), a Passive Matrix Organic Light Emitted Diode (PMOLED), a flexible display, or a transparent display.

The key input unit 130 can include a plurality of keys configured to receive numerical or alphabetic information and set various types of functions. The keys can include a menu fetch key, a screen on/off key, a power on/off key, and a volume control key. The key input unit 130 can generate key events related to user setting and control of the functions of the mobile electronic device 100, and can transfer the key events to the controller 160. The key events can include a power on/off event, a volume control event, a screen on/off event, and a shutter event. The controller 160 can control the aforementioned elements in response to such key events. The keys of the key input unit 130 can be called hard keys, and virtual keys displayed in the display panel 123 can be called soft keys.

The audio processing unit 140 can include a speaker configured to output audio data received when a call is made and audio data according to the playback of an audio file stored in the storage unit 150 and a microphone configured to collect a user's voice or other audio signals. The audio processing unit 140 can output audio data when content downloaded from a web page is played back. Furthermore, the audio processing unit 140 can output a corresponding alarm or a predetermined guidance sound if one of the streaming method and the downloading method is selected when content is selected or if specific content is added to the content playback list. The output of the alarm or guidance sound can be omitted depending on user setting.

The storage unit 150 can store a boot program, an Operating System (OS), and applications. As well known, the OS can function as an interface between hardware and an application and between applications, and can manage computer resources, such as a Central Processing Unit (CPU), a Graphic Processing Unit (GPU), main memory, and auxiliary memory. Furthermore, the OS can control the operations of hardware and the execution of applications, can determine order of tasks, can control the calculation of the CPU and the GPU, and can manage the storage of data and files. Applications can be divided into embedded applications and 3rd party applications. For example, the 3rd party applications can include a web browser, an e-mail program, and instant messages. The 3rd party application is received from an app market server by the mobile electronic device 100, and is installed on the mobile electronic device 100. When power is supplied from a battery to the controller 160, a boot program is first loaded onto the main memory (e.g., RAM) of the controller 160. The boot program loads the OS onto the main memory. The OS can load an application, for example, a video player capable of playing back content onto the main memory.

The storage unit 150 in accordance with an embodiment of the present disclosure can store the content playback list 151. The content playback list 151 can store information about at least one piece of content downloaded from a web page. When content is received from a web page in a streaming way, the content playback list 151 can store information about a URL at which the received content is placed and information about the URL of a web page from which the content is obtained. Furthermore, if information about two or more pieces of content is stored in the content playback list 151, the content playback list 151 can further store information about a playback order.

Furthermore, the storage unit 150 in accordance with an embodiment of the present disclosure can store a content control program. The content control program can include a routine for adding content to the content playback list 151, a routine for editing the content playback list 151, and a routine for moving to a web page from which content has been obtained. The routine for adding content to the content playback list 151 can include a sub routine for checking whether content now being played back is present or not and a sub routine for determining whether or not to first play back additionally selected content if content now being played back is present. The routine for editing the content playback list 151 can include a sub routine for selecting the editing of the content playback list 151 and a sub routine for changing playback order of pieces of content stored in the content playback list 151.

The controller 160 can control the overall operation of the mobile electronic device 100 and the flow of signals between the internal elements of the mobile electronic device 100, can perform a function for processing data, and can control the supply of power from the battery to the aforementioned elements. The controller 160 can include a CPU and a GPU. As well known, the CPU is the core controller of a computer system for performing the calculation and comparison of data and the interpretation and execution of instructions. The GPU is a graphic controller configured to perform the calculation and comparison of data and the interpretation and execution of instructions related to graphics instead of the CPU. The CPU and the GPU can be integrated into a single package in which two independent cores (e.g., quad cores) are formed in a single integrated circuit. In some embodiments, the CPU and the GPU can have been integrated into a single chip (e.g., a System on Chip (SoC)). In some embodiments, the CPU and the GPU can have been packaged in a multi-layer structure. An element including the CPU and the GPU can be called an Application Processor (AP).

The controller 160 can include main memory, for example, RAM. The main memory can store various types of programs loaded from the storage unit 150, for example, a boot program, a host OS, a guest OS, and application. That is, the CPU and GPU of the controller 160 can access such a program, interpret the instruction of the program, and execute a function (e.g., a pop-up function) based on a result of the interpretation. Furthermore, the controller 160 can include cache memory configured to temporarily store data to be written into the storage unit 150 and to temporarily store data read from the storage unit 150.

The controller 160 in accordance with an embodiment of the present disclosure can receive a specific content selection input from a user, can receive information about selected content from a corresponding server in a web page, and can store the received information. The stored information about the content can be information about a URL at which the content is placed and information about the URL of a web page from the content is obtained. Furthermore, if a user selects the streaming method as a content reception method, the controller 160 can perform control so that content is downloaded in a temporary file format and at the same time the data of content corresponding to a specific amount is played back. Furthermore, in the case of the downloading method, the controller 160 can perform control so that the data of content is automatically played back when downloading is completed. More specifically, if two or more pieces of content are downloaded from a web page and played back, the controller 160 in accordance with an embodiment of the present disclosure can perform control so that content that belongs to the two or more pieces of content and that is first downloaded is first played back regardless of content selection order according to a user's input.

Furthermore if content now being played back in the mobile electronic device 100 is present and content is additionally selected, the controller 160 can register the selected content with the content playback list 151. More specifically, if specific content is additionally played back in the state in which content now being played back is present, the controller 160 can perform control so that the content now being played back continues to be played back and at the same time, the URL of a web page from which the specific content has been is stored in order to store information about the URL in the content playback list 151. Furthermore, the controller 160 can perform control so that additionally selected content is played back over content now being played back, for example, so that the playback of the content now being played back is stopped and the additionally selected content is preferentially played back.

Furthermore, the controller 160 can perform control so that an edit input to the content playback list 151 is received and the display panel 123 outputs the content playback list 151. In this case, the output content playback list 151 can be displayed in a multi-layer structure, can be displayed on one side of a pop-up window, or can be displayed in the entire pop-up window. The controller 160 can perform control so that playback order of pieces of content displayed in the output content playback list 151 is changed or a movement is made to the URL of a web page from which the pieces of content have been obtained. Detailed examples of such control are described below with reference to the accompanying drawings.

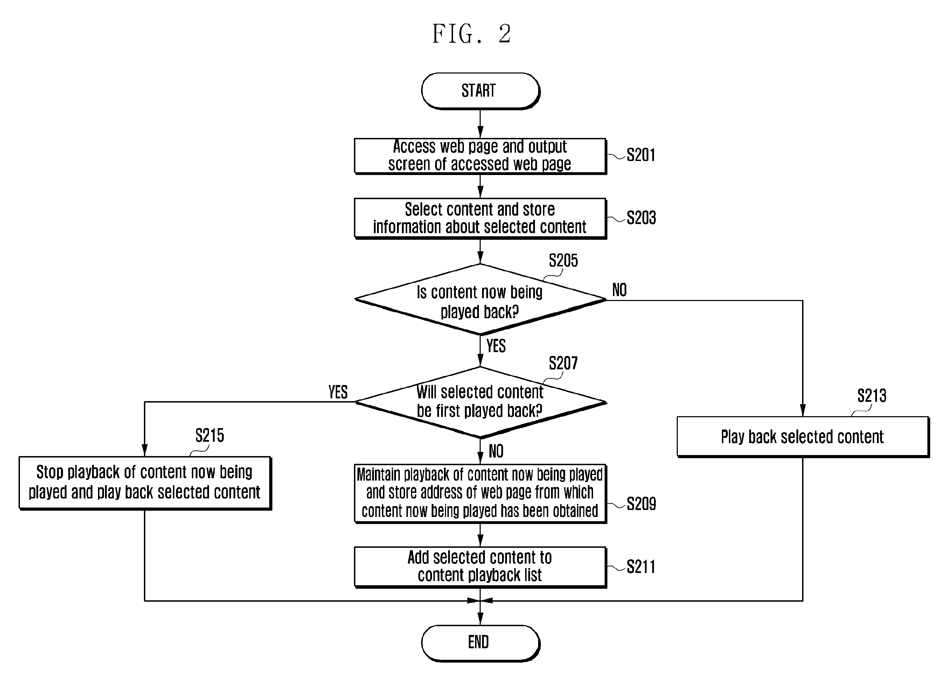

FIG. 2 is a flowchart illustrating a method for registering content, output to a pop-up window, with the content playback list in accordance with an embodiment of the present disclosure.

Referring to FIGS 1 and 2, at operation S201, the controller 160 can access a web page and output a screen of the accessed web page. More specifically, when power is supplied to the mobile electronic device 100, the controller 160 can initialize the elements of the mobile electronic device 100 using the supplied power, and can display a standby screen in response to predetermined schedule information. When a web page access request from a user is received from the touch screen 120 or the key input unit 130 in the state in which the standby screen has been displayed, the controller 160 can control the touch screen 120 so that it displays a screen corresponding to the web page is displayed.

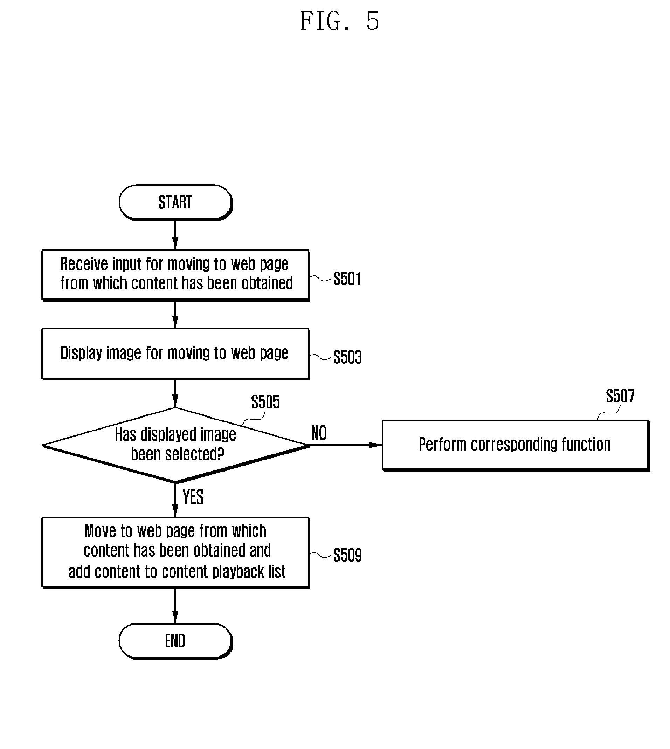

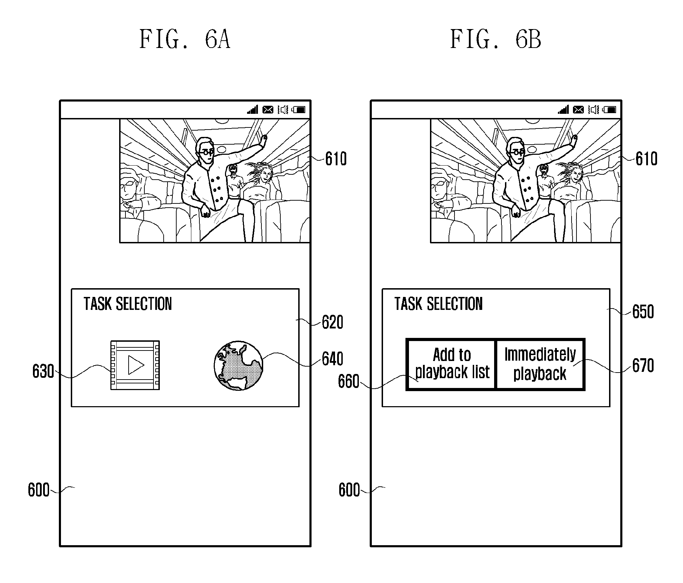

At operation S203, the controller 160 can select content in the output screen of the web page the screen, and can receive information about the selected content from a server apparatus corresponding to the URL of the web page. The information about the selected content can include source data necessary to play back the content and the data of the URL at which the content is placed. Furthermore, the controller 160 can control the display panel 123 so that it outputs a pop-up window in which the content is selected using any one of the streaming method and the downloading method. FIG. 5 is an exemplary diagram illustrating a method for registering content with the content playback list 151 in accordance with an embodiment of the present disclosure. When input for selecting the content is received, the controller 160 can control the display panel 123 so that it outputs a pop-up window 620 in which a method for receiving the content is selected in the state in which the screen of the web page has been output, as illustrated in FIG. 6A. For example, an image 630 indicative of the streaming method and an image 640 indicative of the downloading method can be displayed in the pop-up window so that a user can select a content reception method. It is however to be noted that the example is only illustrative and in accordance with an embodiment of the present disclosure, the content reception method can be previously set by a user so that the content is received using any one of the streaming method and the downloading method.

At operation S205, the controller 160 can check whether or not content now being played back is present. The mobile electronic device 100 in accordance with an embodiment of the present disclosure can provide support so that content is selected although content now being played back is present. For example, in Fig. 6A, content 610 now being played back can be output by a separate screen through the pop-up window 620, and content can be additionally selected from a part of the web page displayed on a screen by which the pop-up window 620 is not output. Although the content is additionally selected, the controller 160 can perform control so that the playback of the content now being played back is not stopped.

If, as a result of the determination at operation S205, it is determined that content now being played back is present, the controller 160 can receive input for selecting whether or not to preferentially play back the selected content at operation S207. As illustrated in FIG. 6B, the controller 160 can control the display panel 123 so that it outputs a pop-up window 650 for selecting which one of the content now being played back and the selected content will be first played back. As illustrated in Fig. 6B, the pop-up window 650 can include an image 660 for additionally registering the selected content with the content playback list 151 and an image 670 for selecting the added content so that it is first played back.

If, as a result of the determination at operation S207, it is determined that input for preferentially selecting and playing back the selected content is not received, the controller 160 can continue to play back the content now being played back, and can store the URL of a web page from the selected content is obtained at operation S209. The URL of the web page from which the selected content is additionally obtained has been illustrated as being stored after operation S205 and operation S207 in FIG. 2, but the present disclosure is not limited thereto. For example, the URL of the web page from which the selected content is additionally obtained can be stored when storing information about the content from the web page, that is, the URL at which the content is placed at operation S203.

At operation S209, the controller 160 can additionally register the selected content with the content playback list 151. Furthermore, when the playback of the content now being played back is completed, the controller 160 can perform control so that the added content is automatically played back. For example, if the selected content is received using the streaming method and two or more pieces of content are selected, the controller 160 can perform control so that the two or more pieces of content are registered with the content playback list 151 in order of the two or more pieces of content registered and the two or more pieces of content are played back. For another example, if the selected content is received using the downloading method and two or more pieces of content are selected by a user, the controller 160 can perform control so that content that belongs to the two or more pieces of content and that is first downloaded is registered with the content playback list 151 regardless of the two or more pieces of content selected or the two or more pieces of content are automatically played back in order of the time when the two or more pieces of content are downloaded. It is however to be noted that the examples are only illustrative and the controller 160 can perform control so that the two or more pieces of content are played back in order of the two or more pieces of content selected although the two or more pieces of content are received using the downloading method.

If, as a result of the determination at operation S205, it is determined that content now being played back is not present, the controller 160 can immediately play back the selected content at operation S213.

If, as a result of the determination at operation S207, it is determined that input for preferentially selecting and playing back the selected content is received, the controller 160 can perform control so that the playback of the content being played back is stopped and the selected content is preferentially played back at operation S215. For example, as illustrated in FIG. 6B, when input to the image 670 for additionally selecting the selected content so that it is first played back, the controller 160 can perform control so that the playback of the content now being played back is stopped and the selected content is additionally played back. Although not illustrated in FIG. 2, even before or when the playback of the additionally selected content is completed, the controller 160 can store the URL of the web page from which the content whose playback has been stopped is obtained, and can register the content whose playback has been stopped with the content playback list 151 in order to play back the content whose playback has been stopped again at operation S215. Accordingly, even before or when the playback of the additionally selected content is completed, the controller 160 can perform control so that the content whose playback has been stopped is conveniently played back. Furthermore, when the playback of the additionally selected content is completed, the controller 160 can perform control so that the content whose playback has been stopped is automatically played back.

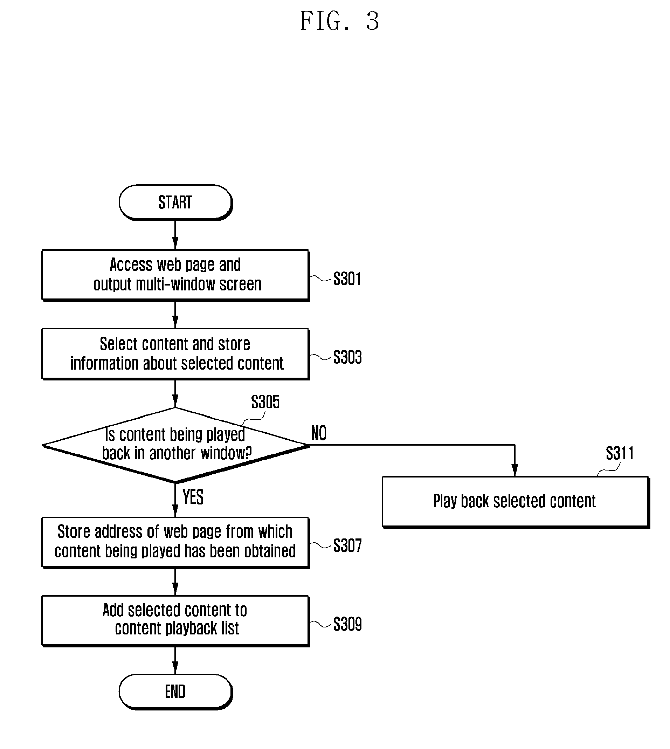

FIG. 3 is a flowchart illustrating a method for registering content, output in a multi-window way, with the content playback list in accordance with another embodiment of the present disclosure.

Referring to FIGS. 1 and 3, at operation S301, the controller 160 can access a web page and output the web page to a screen in a multi-window way. For example, the controller 160 can execute a multi-window function and output the web page to the other window (hereinafter referred to as a "first window") in the state in which a screen on which another application is executed is output to one window (hereinafter referred to as a "second window").

At operation S303, the controller 160 can select content on the screen of the output web page, and can receive information about the selected content from a server apparatus corresponding to the URL of the web page. The information about the selected content can include source data necessary to play back the selected content and the data of the URL at which the selected content is placed. Furthermore, as in the pop-up window method, the controller 160 can control the display panel 123 so that it outputs a pop-up window in which any one of the streaming method and the downloading method is selected.

At operation S305, the controller 160 can determine whether or not content being played back is present in one window, that is, the second window. If, as a result of the determination at operation S305, it is determined that the content being played back is present in the second window, the controller 160 can store the address of a web page from which the content being played back in the first window has been obtained at operation S307. As in the pop-up window method for FIG. 2, the address of the web page from which the content being played back has been obtained at operation S307 can be stored when storing the information about the selected content, that is, a URL at which the selected content is placed at operation S303.

At operation S309, the controller 160 can perform control so that so that the selected content is additionally registered with the content playback list 151. If, as a result of the determination at operation S305, it is determined that the content being played back is not present in the second window, the controller 160 can perform control so that the selected content is played in the first window at operation S311.

The controller 160 has been illustrated as determining whether or not the content being played back is present in one window, that is, in the second window, at operation S305 and as performing control so that so that the selected content is additionally registered with the content playback list 151 at operation S309 if, as a result of the determination, the content being played back is present, but the technical spirit of the present disclosure is not limited thereto. In other words, if content is able to be played back in the first window in the state in which content is played back in the second window through the multi-window function, the address of a web page from which the content played back in the first window can be stored, and the selected content can be additionally register with the content playback list 151.

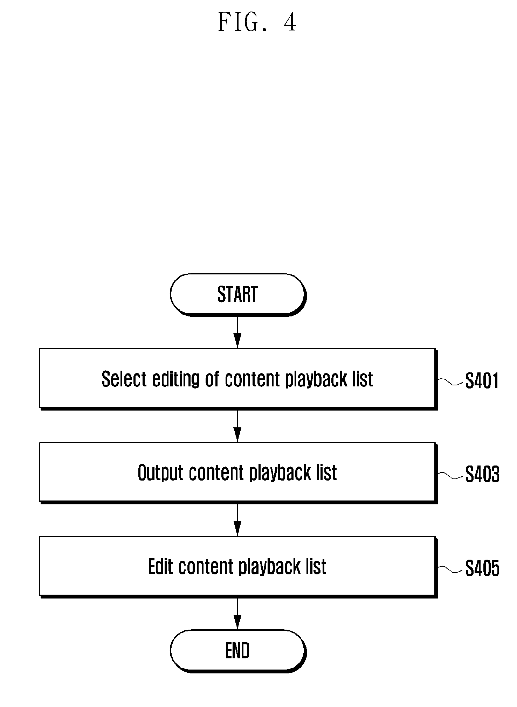

FIG. 4 is a flowchart illustrating a method for editing content registered with the content playback list in accordance with an embodiment of the present disclosure.

Referring to FIGS. 1 and 4, at operation S401, the controller 160 can receive input for editing the content playback list 151 while content is played back in a pop-up window or multi-window way. For example, the controller 160 can receive a long touch input to a screen on which content is played back, or can receive a key input that has been mapped for editing selection through the key input unit 130.

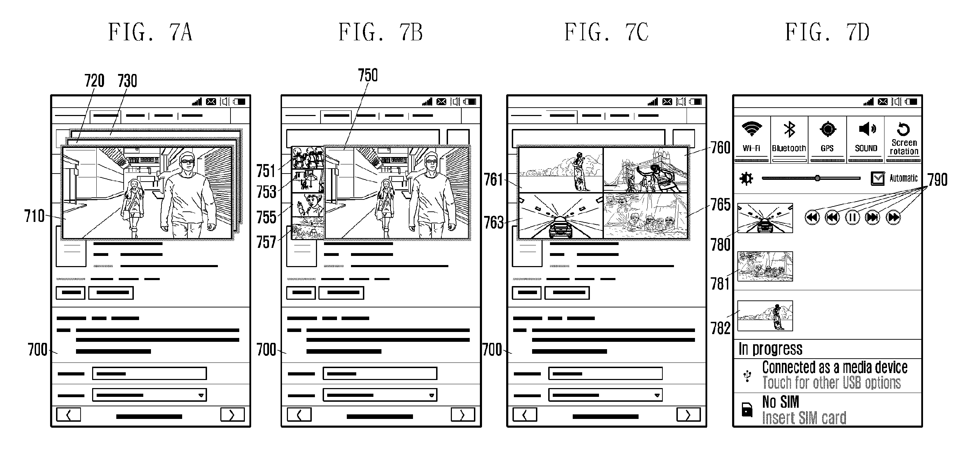

At operation S403, the controller 160 can control the display panel 123 so that it outputs the content playback list 151. The content playback list 151 according to various embodiments of the present disclosure can be output in various ways. FIGS. 7A to 7D are diagrams illustrating the operations for editing content registered with the content playback list 151 in accordance with an embodiment of the present disclosure. Referring to FIGS. 7A to 7D, FIG. 7A illustrates a screen 700 in which content 710 now being played back and pieces of content 720 and 730 registered with the content playback list 151 are output to a pop-up window in a bookmark form having a multi-layer structure. In FIG. 7A, the content 710 now being played back can be output to the highest layer. The order of that the pieces of content are played back can be set from the content 710 corresponding to the highest layer to the content 730 corresponding to the lowest layer. For example, when the playback of the content 710 corresponding to the highest layer is completed, the playback of the content 720 corresponding to a next layer can be started. FIG. 7B illustrates a screen 700 in which pieces of content 751, 753, 755, and 757 registered with the content playback list 151 are output to one side of a pop-up window. In FIG. 7B, content 750 now being played back occupies the largest area of the screen 700. When the playback of the content 750 now being played back is completed, the content 751 displayed at the upper left part of the screen 700, the content 753, and the content 755 are sequentially played back, and the content 757 displayed at the lower left part of the screen 700 can be then played back. Furthermore, as in FIG. 7C, pieces of content 761, 763, and 765 registered with the content playback list 151 can be output along with content 760 displayed on the entire screen 700 of a pop-up window. The screen 700 has been illustrated as being equally split into four parts and the pieces of content 760, 761, 763, and 765 are output to the four parts. In some embodiments, however, the pieces of content 761, 763, and 765 registered with the content playback list 151 can be small displayed in a thumbnail form, and the content 760 being played back can be large displayed. The controller 160 can perform control so that order that the pieces of content are played back is determined clockwise or counterclockwise on the basis of the content 760.

At operation S405, the controller 160 can edit the content playback list 151 in the state in which the content playback list 151 has been output. More specifically, the controller 160 can change order that pieces of content registered with the content playback list 151 are played back.

In FIG. 7A, the controller 160 can perform control so that the playback of the content 710 that is now being played back and that corresponds to the highest layer is stopped and the content 720 corresponding to a next layer and pieces of content following the content 720 are played back or the content 730 corresponding to the lowest layer and pieces of content following the content 730 are played back. For example, in the state in which a drag event for the region of the content 710 now being played back is maintained, that is, in the state in which a touch on the region of the content 710 now being played back is maintained after the touch, when the touch is dragged between the region of the next content 720 and the region of the content 730, the controller 160 can perform control so that order that the content 710, the content 720, and the content 730 are played back is changed into order that the content 720, the content 710, and the content 730 are sequentially play back. In some embodiment, when a swipe is performed from the region of the content 710 now being played back or the region of the content 710 now being played back is touched and dragged to the background screen of the screen 700, the controller 160 can perform control so that the content 710 now being played back is last played back.

As in FIG. 7A, in FIG. 7B, order that the pieces of content are played back registered with the content playback list 151 can be changed. For example, if a region corresponding to the content 751 played back after the content 750 now being played back is touched and dragged and the region overlaps with the region of the content 753, the controller 160 can perform control so that order that the content 753 and the content 751 are played back is reversed. Furthermore, when a swipe is performed on a region corresponding to the content 750 now being played back or the region corresponding to the content 750 now being played back is touched and dragged to the background region of the screen 700, the controller 160 can change order so that the content 750 now being played back is played back after the content 757 that has been set to be last played back. In this case, the content 750 now being played back can be output to the region of the content 757.

Furthermore, in FIG. 7C, the controller 160 can perform control so that order that the pieces of content are played back depending on the direction in which a touch drag for the region of the content 760 now being played back is received. For example, in the state in which a touch on the region of the content 760 now being played back is maintained, when the touch region is dragged so that it overlaps with a region corresponding to the content 765, order that the content 765 and the content 760 now being played back can be reversed.

The controller 160 can output the content playback list 151 in a quick panel form. As illustrated in FIG. 7D, the controller 160 can control the display panel 123 so that it outputs content 780 now being played back 780 and a control button 790, and can perform control so that pieces of content 781 and 782 registered with the content playback list 151 are output under the region in which the content 780 now being played back is output according to playback order.

FIG. 5 is a flowchart illustrating a method for moving to the URL of a web page from which content has been obtained in accordance with an embodiment of the present disclosure.

Referring to FIG. 5, at operation S501, the controller 160 can receive input for moving to a web page from which content has been obtained. For example, the controller 160 can receive a long touch input to a screen on which content is now being played back or receive a touch input to a corresponding button displayed on the screen in a pop-up window or multi-window way, or can receive a mapped key input through the key input unit 130.

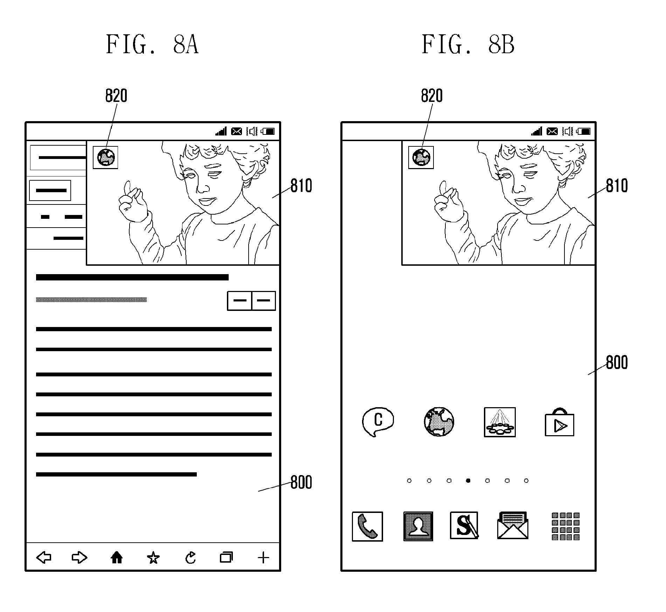

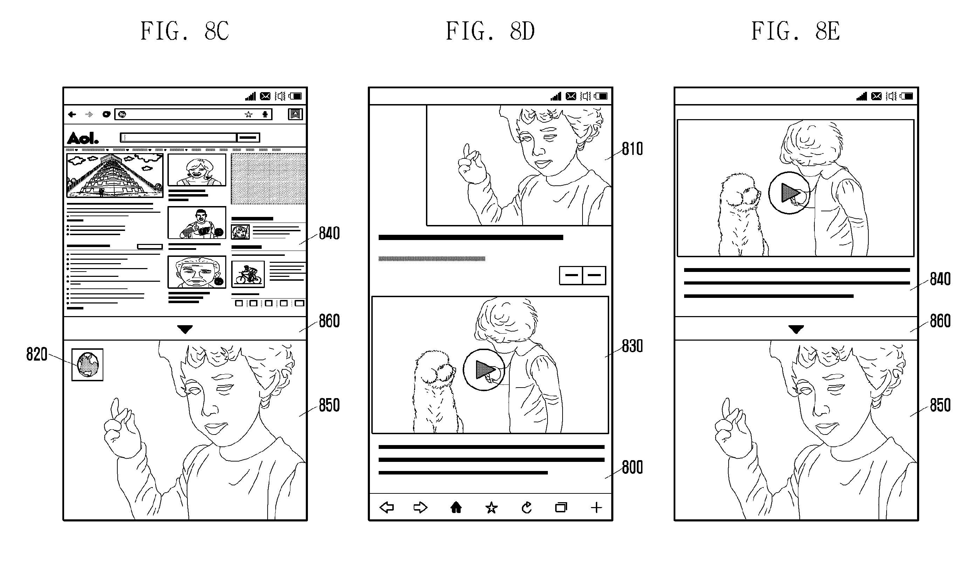

At operation S503, the controller 160 can display an image for moving to the web page. FIG. 8A to 8E are diagrams illustrating the operations for moving to a web page from which content has been obtained in accordance with an embodiment of the present disclosure. FIGS. 8A to 8B illustrate examples of screens output in a pop-up window way, and FIGS. 8C to 8E illustrate examples of screens output in a multi-window way. FIG. 8A illustrates an example in which another web page is output to the lower side of a screen 800 in addition to a web page from which content being played back has been obtained, the content being played back is output to a pop-up window 810 over other web pages, and an image 820 for moving to a web page from which the content being played back has been obtained is displayed on one side at the upper part of the pop-up window 810. In FIG. 8B, the screen 800 outputs the pop-up window 810 in a standby screen state. More specifically, according to some embodiments, if not only another web page is output to the lower layer as in 801, but the web page output to the lower layer is ended while playing back content, another screen including a standby screen can be output. FIG. 8C illustrates an example in which selected content is output to a first window 850 in a multi-window way and a web page other than a web page from which the selected content has been obtained is output to a second window 840. Furthermore, a screen size control bar 860 for controlling the ratio of sizes between the first window 850 and the second window 840 can be further output. In this case, the screen size control bar 860 can be omitted according to some embodiments. As in the pop-up window, in a multi-window method, while the content is played back through the first window 850, the web page output to the second window 840 can be ended, and another screen can be output. Furthermore, according to some embodiments, when the web page output to the second window 840 is ended, the content output to the first window 850 can be output to the entire screen. At operation S505, the controller 160 can check whether input for selecting the image for moving to the web page is received or not. For example, the controller 160 can check whether or not a touch event for the image 820 for moving to the web page is received or not.

If, as a result of the check at operation S505, input for selecting the image for moving to the web page is found to have not been received, the controller 160 can perform a corresponding function at operation S507. For example, the controller 160 can receive a touch input to a region other than an image displayed in a pop-up window and control the volume of content now being played back, or can perform control so that a long touch input is received and the content playback list 151 is output as described above. If any input is not received, the controller 160 can control the display panel 123 so that the image 820 for moving to the web page from which content has been obtained disappears after a lapse of some time.

If, as a result of the check at operation S505, input for selecting the image for moving to the web page is found to have been received, the controller 160 can perform control so that the web page from which the content has been obtained is output at operation S509. For example, as illustrated in FIG. 8C, the controller 160 can perform control so that the content 810 now being played back continues to be played back in the pop-up window and the web page from which the content now being played back has been obtained is output to the lower layer of the pop-up window. More specifically, in the state in which the web page is output to the lower layer of the pop-up window in addition to the web page from which the content now being played back has been obtained in 801, in the state in which the content selected through the pop-up window is output in the standby screen state in FIG. 8B, or in the state in which the content is output to the first window 850 in a multi-window way in FIG. 8C, the controller 160 can output a screen from which the content has been obtained as in FIG. 8D or 8E if the image 820 for moving to the web page from which the content has been obtained is found to have been selected. For example, FIG. 8D illustrates an example in which the output of the content through the pop-up window is maintained and the web page from which the output content has been obtained is output. Furthermore, FIG. 8E illustrates an example in which the output of the content to the first window 850 is maintained and the web page from which the content has been obtained is output to the second window 840. Furthermore, if the content 810 now being played back has not been registered with the content playback list 151, the controller 160 can perform control so that the content 810 now being played back is registered with the content playback list 151.

As described above, the methods of controlling content in a mobile electronic device in accordance with the embodiments of the present disclosure can provide support so that content is controlled, and can provide excellent convenience because a list of pieces of content output to a pop-up window is managed.

The aforementioned mobile electronic device 100 can further include a variety of additional modules depending on the type provided. More specifically, the mobile electronic device 100 can further include elements not described above, such as a short-range communication module for short-range communication, a camera module for capturing still images and moving images of a subject, an interface for enabling the mobile electronic device 100 to send and receive data using a wired communication method or a wireless communication method, an Internet communication module for performing an Internet function over the Internet, and a digital broadcasting module for performing a function for receiving and playing back digital broadcasting. The elements may not be all enumerated because they are modified in various ways according to the convergence trend of digital devices, but elements equivalent to the aforementioned elements may be further added to the mobile electronic device. Furthermore, it is to be noted that in the mobile electronic device 100 of the present disclosure, some of the elements may be omitted from the configuration or some of the elements may be replaced with other elements. This may be easily understood by those skilled in the art.

Furthermore, some exemplary embodiments of the present disclosure have been described above through the specification and drawings. Although specific terms are used, the terms are merely used according to their common meanings in order to easily describe the technical contents of the present disclosure and help understanding of the present disclosure, and the present disclosure is not limited to the aforementioned embodiments of the present disclosure. That is, it will be evident to those skilled in the art that various embodiments based on the technical spirit of the present disclosure can be implemented.

Although the present disclosure has been described with an exemplary embodiment, various changes and modifications may be suggested to one skilled in the art. It is intended that the present disclosure encompass such changes and modifications as fall within the scope of the appended claims.

## Claims

1. A method for controlling content in a mobile electronic device, the method comprising:
selecting at least one first content to be played on a web page;
checking whether a second content is being played back;
receiving an input for registering the first content with a list while the second content is played back; and
when the input is received, storing information on the web page from which the first content is obtained and registering the first content with the list.

2. The method of claim 1, wherein the first content and the second content are output on either a pop-up window or multiple pop-up windows.

3. The method of claim 1, further comprising:
receiving the at least one of the first content selected from the web page, wherein the first content is received using at least one of a streaming method and a downloading method.

4. The method of claim 3, wherein registering the first content with the list comprises sequentially registering two or more contents with the list when the webpage contains a plurality of contents, so that the two or more contents are downloaded from the web page.

5. The method of claim 1, wherein registering the first content with the list comprising:
stopping the playback of the second content; and
playing back the first content, and registering the second content with the list.

6. The method of claim 1, further comprising displaying the list on a screen, wherein outputting the list comprises one of displaying the at least one content registered with the list in a bookmark form of a multi-layer structure, and splitting the list and displaying the split lists on either a part or entire of the pop-up window.

7. The method of claim 6, further comprising:
changing a play-back order of the at least one content in the pop-up window.

8. The method of claim 1, further comprising:
displaying an image linking to the web page on which the at least one content is located when the at least one content registered with the list is output;
selecting the image linking to the web page on which the at least one content is located; and
moving to the web page when the image is selected.

9. A mobile electronic device, comprising:
a screen configured to display an image; and
a controller configured to :
receive a selection at least one a first content on a web page;
determine whether a second content is being played back;
receive an input for registering the first content with the list, when the second content is played back; and
when the input is received, store information on the web page on which the first content is located and register the first content with the list.

10. The device of claim 9, wherein the first content and the second content are output on either a pop-up window method or multiple pop-up windows.

11. The device of claim 9, further comprising a wireless communication unit,
wherein the controller is configured to control the wireless communication unit to receive the at least one first content selected from the web page, and
wherein the first content is received using at least one of a streaming method and a downloading method through the wireless communication unit.

12. The device of claim 9, wherein the controller is configured to:
stop the playback of the second content; and
play back the first content and register the second content with the list.

13. The device of claim 9, wherein the controller is configured to display the list on the touch screen, and configured to cause the touch screen to display the at least one content registered with the list in a bookmark form of a multi-layer structure, or split the list and display the split lists on either a part or entire of the pop-up window.

14. The device of claim 13, wherein the controller is configured to change a play-back order of the at least one content in the pop-up window.

15. The device of claim 13, wherein the controller is further configured to the touch screen to display an image linking to the web page on which the at least one content is located when the at least one content registered with the list is output, to
select the image linking to the web page on which the at least one content is located, and to move to the web page when the image is selected.
